# EUROPÄISCHE PATENTSCHRIFT

(11) **EP 1 566 400 B1**
(45) Veröffentlichungstag und Bekanntmachung des Hinweises auf die Patenterteilung: **28.05.2008**
(21) Anmeldenummer: 05001655.9
(22) Anmeldetag: 27.01.2005
(51) Int. Cl.: C08J 9/36

(54) **Schaumstoffplatte mit Beschichtung zur Haftung von Mörtel - Beton- und Putzsystemen**
Foam panel having a coating for adhesion to mortar, concrete and plaster
Plaque de mousse ayant un revêtement d'adhésion pour mortier, béton et enduit

(30) Priorität: 20.02.2004 DE 102004008864
(43) Veröffentlichungstag der Anmeldung: 24.08.2005
(73) Patentinhaber: BASF SE, 67056 Ludwigshafen (DE)
(72) Erfinder: Ehrenstein, Moritz, Dr., 67063 Ludwigshafen (DE); Pietsch, Ines, Dr., 67346 Speyer (DE); Turznik, Gerhard, Dr., 67269 Grünstadt (DE); Schlichting, Peter, Dr., 68199 Mannheim (DE); Ruch, Joachim, Dr., 67157 Wachenheim (DE); Pakusch, Joachim, Dr., 67346 Speyer (DE)

(56) Entgegenhaltungen:
- DE-A1- 3 525 289
- US-A- 5 192 608
- PATENT ABSTRACTS OF JAPAN Bd. 1998, Nr. 10, 31. August 1998 (1998-08-31) & JP 10 141434 A (COSMO SOGO KENKYUSHO:KK; COSMO OIL CO LTD), 29. Mai 1998 (1998-05-29)

## Beschreibung

Die Erfindung betrifft Schaumstoffplatten mit einer Beschichtung auf mindestens einer Plattenoberfläche wobei die Beschichtung einen Polymerfilm, der eine Glasübergangstemperatur im Bereich von -60 bis + 40 °C aufweist, enthält sowie ein Verfahren zur deren Herstellung durch Auftragen und Abtrocknen einer Polymerdispersion.

In der Regel haben Schaumstoffplatten, insbesondere Platten mit Schäumhaut, keinen ausreichenden Haftverbund mit mineralischen Baustoffen. Aus diesem Grund werden beispielsweise extrudierte Polystyrol-Hartschaumstoffe (XPS) nachträglich mit z. B. einem Waffelmuster geprägt. Diese Nachbearbeitung ist jedoch aufwendig und führt zu zusätzlichen Kosten. Die Platten sind auch nicht im Sichtbereich einsetzbar und eigenen sich somit nur für den Vorputz.

Die DE-A1-3525289 beschreibt Hartschaumplatten zur Wärmedämmung mit einem Unterputz auf Basis von Vinyltoluol-Acrylat-Copolymeren.

Aufgabe der vorliegenden Erfindung war es, den genannten Nachteilen abzuhelfen und eine Schaumstoffplatte sowie eine einfaches und kostengünstiges Verfahren zu deren Herstellung bereitzustellen, die ohne Prägung eine verbesserte Haftung zu Mörtel-, Beton- und Putzsystemen aufweist.

Demgemäss wurde eine Schaumstoffplatte mit einer Beschichtung auf mindestens einer Plattenoberfläche gefunden, wobei die Beschichtung einen Polymerfilm, der eine Glasübergangstemperatur im Bereich von -60 bis + 40 °C aufweist und eine Dicke im Bereich von 5 bis 300 µm aufweist, enthält.

Bevorzugt liegt die Glasübergangstemperatur des Polymerfilmes im Bereich von -10 bis + 20°C. Die Glasübergangstemperatur kann mittels Differential Scanning Calorimetrie (DSC) bestimmt werden.

Die Haftzugfestigkeit zwischen einem Unterputz oder Beton und der mit der Beschichtung versehenen Plattenoberfläche der Schaumstoffplatte beträgt in der Regel mindesten 50 kPa, bevorzugt mindestens 100 kPa, besonders bevorzugt mindestens 200 kPa, gemessen nach DIN EN 1607 an Proben nach DIN EN13494.

Als Schaumstoffplatte können Partikelschaumstoffe oder Extrusionsschaumstoffe verwendet werden. Partikelschaumstoffe sind durch Versintem von Schaumpartikeln, beispielsweise aus expandiertem Polyolefinen, wie expandierbarem Polypropylen (EPP) oder vorgeschäumtem Partikeln aus expandierbarem Polystyrol (EPS) erhältlich. Bevorzugt verwendet man Schaumstoffplatten aus einem Extrusionsschaum auf Basis eines Styrolpolymeren (XPS).

Die Schaumstoffplatten haben in der Regel eine Dichte im Bereich von 20 bis 200 g/l und sind geschlossenzellig, d.h. sie weisen bevorzugt Zellen auf, die zu mindestens 90%, insbesondere zu 95 bis 100% geschlossenzellig sind. Für eine weitere Verbesserung der Haftung zu Mörtel-, Beton- und Putzsystemen können sie nach der Herstellung und vor der Beschichtung z.B. mit einem Waffelmuster geprägt und gestanzt werden. Dadurch erreicht man eine teilweise Offenzelligkeit in der Oberfläche mit einer Tiefe im Bereich von 0,5 bis 5 mm.

Die Schaumstoffplatten weisen in der Regel eine Dicke im Bereich von 5 bis 500 mm, bevorzugt 10 bis 400 mm, besonders bevorzugt 15 bis 350 mm auf. Insbesondere für die Wärmedämmung in Bauanwendungen werden quaderförmige Schaumstoffplatten mit einem Querschnitt von mindestens 50 cm² eingesetzt.

Vorteilhaft können auch Schaumstoffplatten mit einer Wärmeleitfähigkeit von 0,035 W/mK (gemessen nach DIN 52612 bei 10°C) oder darunter eingesetzt werden. Diese enthalten in der Regel 0,01 bis 10 Gew.-%, bezogen auf das Polymer, eines partikelförmigen IR-Absorbers, wie Ruß, Metallpulver, z. B. Aluminiumpulver und Titandioxid, bevorzugt Graphit mit einer mittleren Partikelgröße von 1 bis 100 µm.

Besonders bevorzugt werden unter Verwendung halogenfreier Treibmittel hergestellte, gleichmäßige, geschlossenzellige und formstabile extrudierte Polystyrolschaumstoffkörper (XPS) aus einer Polystyrol-Thermoplastikmatrix mit einem mittleren Molekulargewicht M_{w} zwischen 175 000 und 500 000 g/mol und einer Uneinheitlichkeit M_{w}/Mₙ von größer als 1,5, wie sie in der EP-A-0 802 220 beschrieben sind. Sie weisen in der Regel eine Druckfestigkeit, gemessen nach DIN 53421, im Bereich von 25 bis 40 g/l und die Dicke im Bereich von 20 bis 200 mm. Der Querschnitt beträgt in der Regel mindestens 50 cm², bevorzugt 100 bis 2000 cm².

Der die Beschichtung bildende Polymerfilm enthält in der Regel ein amorphes, thermoplastisches Polymer. Bevorzugt werden Styrol enthaltende Polymere mit einem Styrolgehalt im Bereich von 10 bis 90 Gew.-%. Besonders bevorzugt werden Styrol-Acrylate und Styrol-Butadien-Copolymere als filmbildende Polymere für die Beschichtung eingesetzt.

Die Beschichtung der Schaumstoffplatte kann beispielsweise durch Auftragen einer Polymerlösung oder Polymerdispersion auf eine oder mehrere Plattenoberflächen und anschließendes Abtrocknen erfolgen. Bevorzugt wird die Schaumstoffplatte beidseitig, also auf den beiden gegenüberliegenden großflächigen Plattenoberflächen beschichtet. Als Verfahren zum Auftragen der Polymerlösung oder Polymerdispersion eigen sich Sprühen, Streichen, Tauchen oder Bedrucken. Der Auftrag kann flächendeckend oder in Mustern, z. B. durch Flexodruck erfolgen. Die aufzutragenden Menge richtet sich nach der Art des Polymerfilmes, des aufgetragenen Musters und dem Haftgrund. Bei Verwendung von Polymerdispersionen wird erfindungsgemäß für eine zufriedenstellende Haftung eine Auftragsmenge von 1 bis 50 g/m² verwendet, bevorzugt von 3 bis 30 g/m² , besonders bevorzugt von 5 bis 20 g/m². Die Dicke des sich nach dem Abtrocknen bildenden Polymerfilmes liegt im Bereich von 5 bis 300 µm, bevorzugt im Bereich von 10 bis 200 µm.

Geeignete Polymerdispersionen zur Beschichtung sind solche, die üblicherweise zur Modifizierung mineralischer Baustoffe oder als Fliesenkleber eingesetzt werden. Sie können durch Emulsionspolymerisation von ethylenisch ungesättigten Monomeren, wie Styrol, Butadien oder Acrylaten erhalten werden. Bevorzugt werden Styrol-Acrylat-Dispersionen und Styrol-Butadien-Dispersionen verwendet.

Die Styrol-Butadien-Dispersionen haben vorzugsweise eine Monomerzusammensetzung von ca 70 Gew.-% Styrol und ca 30 Gew-% Butadien und könne gegebenenfalls noch gering Mengen, z. b. 1 bis 5 Gew.%, bezogen auf alle Monomeren, Acrylsäure, Methacrylsäure , Acrylamid oder Methacyrlamid enthalten. Geeignete Dispersionen sind beispielsweise in der EP-A 754657 beschrieben.

Bevorzugt sind Ammoniak-freie Polymerdispersionen, die ein Copolymerisat enthalten, das als Monomere 55 - 80 Gew.-% wenigstens eines Esters der Acrylsäure mit C2-C12-Alkanolen, wie Ethylarcylat, n-Butylacrylat oder 2-Ethylhexylacrylat, 12 - 35 Gew.-% wenigstens eines vinylaromatischen Monomers, wie Styrol und/oder wenigstens eines Esters der Methacrylsäure mit C₁-C₄-Alkanolen, wie Methylacrylat, 3-12 Gew.-% wenigstens eines Monoesters eines C₂-C₆-Alkandiols, wie 2-Hydroxyethylacrylat und 0,1 bis 1 Gew.% wenigstens einer ethylenisch ungesättigen Carbonsäure, wie Acrylsäure oder Methacrylsäure einpolymerisiert enthalten. Die Copolymerisate können gegebenenfalls noch geringe Mengen Monomere mit Harnstoff- oder Thioharnstoffgruppen, wie Ureidoethyenmethacrylat oder hydrolisierbaren Siliziumgruppen, wie 3-Methacryloxypropyltrimethyoxysilan enthalten. Geeignete Polymerdispersionen und deren Herstellungsverfahren sind z. B in EP-A 1180530, EP 1182179 beschrieben.

Vor dem Auftragen können den Polymerdispersionen Füllstoffe, wie Aluminiumsilikate, Quarz, gefällte oder pyrogene Kieselsäure, Leicht- und Schwerspat, Talcum, Dolomit oder Calciumcarbonat, Farbstoffe oder Farbpigmente, wie Titanweiß, Bleiweiß, Zinkweiß, Lithophone und Antimonweiß, Eisenoxidschwarz, Manganschwarz, Cobaltschwarz, Antimonschwarz, Chromgelb, Mennige, Zinkgelb, Zinkgrün, Pinkrot, Cadmiumrot, Cobaltblau, Berliner Blau, Ultramarin, Manganviolett, Cadmiumgelb, Molybdatorange oder Strontiumgelb, Flammschutzmittel, wie halogenfreie oder halogenhaltige Verbindungen, beispielsweise Melamin, Aluminiumoxidhydrate, Ammoniumpolyphosphate, Arylphosphate oder bromierte Verbindungen wie HBCD oder Infrarot (IR)-absorbierende Feststoffe, wie Graphit, Ruß oder Aluminium zugegeben werden. Auf diese Weise lassen sich die physikalischen und dekorativen Eigenschaften der Schaumstoffplatten beeinflussen.

Nach dem Abtrocknen können die beschichteten Platten zur Lagerung ohne signifikantes Verkleben gestapelt werden. Bevorzugt werden die Schaumstoffplatten als Wärmedämmstoff für das Bauwesen eingesetzt.

### Beispiele:

Für die Beispiele wurde eine extrudierte Polystyrol-Hartschaumstoffplatte (XPS), Styrodur 3035 C mit einer Dichte von 33 kg/m3 und einer Dicke von 50 mm verwendet.

Nach dem Abtocknen der Polymerdispersion wurden die beschichteten Platten mit einem etwa 3,5 mm starken Unterputz (Ardurit ® X7G der Firma Ardex, Witten) nach DIN EN 13494 versehen und die Haftung durch Bestimmung der Zugfestigkeit senkrecht zur Plattenebene nach DIN EN 1607 bestimmt.

### Beispiel 1

Auf die XPS-Platte wurde beidseitig mit einem Pinsel 10 g/m² einer Styrol-Acrylatdispersion D1 nach EP-A 1 108 530 aufgetragen. Die Haftfestigkeit des Unterputzes auf der beschichteten Platte betrug 250 kPa, gemessen als Zugfestigkeit nach DIN EN 1607.

### Beispiel 2

Beispiel 1 wurde wiederholt mit dem Unterschied, dass die Styrol-Acrylat-Dispersion vor dem Auftragen mit 20 Gew.-% einer 40 Gew.-%igen Kieselsol-Lösung (spezifische Oberfläche des SiO₂: 200 m²/g) vermischt wurde. Die Haftfestigkeit des Unterputzes auf der beschichteten Platte betrug, gemessen nach DIN 1607 mindestens 150 kPa.

### Beispiel 3

Auf die XPS-Platte wurde beidseitig mit einem Pinsel 10 g/m² einer Styrol-Acrylatdispersion ED1 nach EP-A 1182179 aufgetragen. Die Haftfestigkeit des Unterputzes auf der beschichteten Platte betrug, gemessen nach DIN 1607 mindestens 410 kPa.

### Beispiel 4

Beispiel 3 wurde wiederholt mit dem Unterschied, dass die Styrol-Acrylat-Dispersion ED 1 vor dem Auftragen mit 2,5 Gew.-% pulverförmigem Melamin vermischt wurde. Die Haftfestigkeit des Unterputzes auf der beschichteten Platte betrug, gemessen nach DIN 1607 mindestens 320 kPa.

### Beispiel 5

Auf die XPS-Platte wurde mit einer Rolle 15 g/m² einer wässrigen Styrol-Butadiendispersion (hergestellt gemäß dem Beispiel der EP-A 0 754 657) aufgetragen. Die Haftfestigkeit des Unterputzes auf der beschichteten Platte betrug 290 kPa, gemessen als Zugfestigkeit nach DIN EN 1607.

### Beispiel 6

Beispiel 5 wurde wiederholt mit dem Unterschied, dass die Styrol-Butadiendispersion vor dem Aufragen mit 2,5 Gew.-% pulverförmigem Melamin vermischt wurde. Die Haftfestigkeit des Unterputzes auf der beschichteten Platte betrug 210 kPa, gemessen als Zugfestigkeit nach DIN EN 1607.

## Patentansprüche

1. Schaumstoffplatten mit einer Beschichtung auf mindestens einer Plattenoberfläche, **dadurch gekennzeichnet, dass** die Beschichtung einen Polymerfilm, der einer Glasübergangstemperatur im Bereich von -60 bis +40°C und eine Dicke im bereich von 5 bis 300 µm aufweist, enthält.

2. Schaumstoffplatten nach Anspruch 1, **dadurch gekennzeichnet, dass** die Haftzugfestigkeit zwischen einem Unterputz und der mit der Beschichtung versehenen Plattenoberfläche mindesten 50 kPa, gemessen nach DIN EN 1607 an Proben nach DIN EN13494, beträgt.

3. Schaumstoffplatte nach Anspruch 1 oder 2, **dadurch gekennzeichnet, dass** der Beschichtung ein Flammschutzmittel enthält.

4. Schaumstoffplatte nach einem der Ansprüche 1 bis 3, **dadurch gekennzeichnet, dass** die Beschichtung einen Infrarot (IR)-absorbierenden Feststoff enthält.

5. Schaumstoffplatte nach einem der Ansprüche 1 bis 4, **dadurch gekennzeichnet, dass** sie aus einem Extrusionsschaum auf Basis eines Styrolpolymeren (XPS) besteht.

6. Schaumstoffplatte nach einem der Ansprüche 1 bis 4, **dadurch gekennzeichnet, dass** sie aus einem Partikelschaum aus Polystyrol oder Polyolefin besteht.

7. Verfahren zur Herstellung einer Schaumstoffplatte gemäß einem der Ansprüche 1 bis 6, **dadurch gekennzeichnet, dass** man eine Polymerdispersion auf die Schaumstoffplatte mit einer Auftragsmenge von 1 bis 50 g/m² aufträgt und abtrocknen lässt.

8. Verfahren nach Anspruch 7, **dadurch gekennzeichnet, dass** die Dispersion einen Farbstoff, Farbpigment, Flammschutzmittel oder Infrarot(IR)- absorbierenden Feststoff enthält.

9. Verwendung der Schaumstoffplatten nach einem der Ansprüche 1 bis 6 als Wärmedämmstoff für das Bauwesen.

## Claims

1. A foam sheet with a coating on at least one sheet surface, wherein the coating comprises a polymer film whose glass transition temperature is in the range from -60 to +40°C and whose thickness is in the range from 5 to 300 µm.

2. The foam sheet according to claim 1, wherein the tensile bond strength between a first-coat render system or first-coat render systems and the coated sheet surface is at least 50 kPa, measured in accordance with DIN EN 1607 on specimens in accordance with DIN EN13494.

3. The foam sheet according to claim 1 or 2, wherein the coating comprises a fire retardant.

4. The foam sheet according to any of claims 1 to 3, wherein the coating comprises an infrared- (IR)-absorbent solid.

5. The foam sheet according to any of claims 1 to 4, which is composed of an extruded foam based on a styrene polymer (XPS).

6. The foam sheet according to any of claims 1 to 4, which is composed of a molded foam composed of polystyrene or polyolefin.

7. A process for producing a foam sheet according to any of claims 1 to 6, which comprises applying a polymer dispersion to the foam sheet in an amount of from 1 to 50 g/m² and permitting it to dry.

8. The process according to claim 7, wherein the dispersion comprises a dye, color pigment, flame retardant, or infrared (IR)-absorbent solid.

9. The use of the foam sheets according to any of claims 1 to 6 as thermal insulation for the construction industry.

## Revendications

1. Plaque de mousse munie d'un revêtement sur au moins une surface de la plaque, **caractérisée en ce que** le revêtement contient un film polymère présentant une température de transition vitreuse de l'ordre de -60 à +40°C et une épaisseur de l'ordre de 5 à 300 µm.

2. Plaque de mousse suivant la revendication 1, **caractérisée en ce que** la résistance d'adhérence entre un fond d'enduit et la surface des plaques munie du revêtement est d'au moins 50 kPa, mesurée selon DIN EN 1607 sur des éprouvettes selon DIN EN 13494.

3. Plaque de mousse selon la revendication 1 ou 2, **caractérisée en ce que** le revêtement contient un agent ignifuge.

4. Plaque de mousse selon l'une quelconque des revendications 1 à 3, **caractérisée en ce que** le revêtement contient un solide absorbant les infrarouges (IR).

5. Plaque de mousse suivant l'une quelconque des revendications 1 à 4, **caractérisée en ce qu'**elle consiste en une mousse extrudée à base d'un polymère de styrène (XPS).

6. Plaque de mousse suivant l'une quelconque des revendications 1 à 4, **caractérisée en ce qu'**elle consiste en une mousse particulaire de polystyrène ou de polyoléfine.

7. Procédé de préparation d'une plaque de mousse suivant l'une quelconque des revendications 1 à 6, **caractérisé en ce que** l'on applique une dispersion de polymère sur la plaque de mousse avec une quantité appliquée de 1 à 50 g/m² et on laisse sécher.

8. Procédé selon la revendication 7, **caractérisé en ce que** la dispersion contient un colorant, un pigment colorant, un agent ignifuge ou un solide absorbant les infrarouges (IR).

9. Utilisation des plaques de mousse suivant l'une quelconque des revendications 1 à 6 en tant qu'isolant thermique pour le bâtiment.
